# EUROPÄISCHE PATENTSCHRIFT

(11) **EP 1 769 141 B1**
(45) Veröffentlichungstag und Bekanntmachung des Hinweises auf die Patenterteilung: **17.10.2007**
(21) Anmeldenummer: 05757329.7
(22) Anmeldetag: 01.07.2005
(51) Int. Cl.: F01N 3/20

(54) **REDUKTIONSMITTELZUGABESYSTEM SOWIE VERFAHREN ZUR AUFBEREITUNG UND ZUGABE EINES REDUKTIONSMITTELS ZU EINER ABGASLEITUNG EINER BRENNKRAFTMASCHINE**
REDUCING AGENT ADDITION SYSTEM, AND METHOD FOR PREPARING A REDUCING AGENT AND ADDING THE SAME TO AN EXHAUST PIPE OF AN INTERNAL COMBUSTION ENGINE
SYSTEME D'ADDITION D'AGENT DE REDUCTION ET PROCEDE DE PREPARATION ET D'ADDITION D'UN AGENT DE REDUCTION A UNE LIGNE D'ECHAPPEMENT D'UN MOTEUR A COMBUSTION INTERNE

(30) Priorität: 17.07.2004 DE 102004034568
(43) Veröffentlichungstag der Anmeldung: 04.04.2007
(73) Patentinhaber: DaimlerChrysler AG, 70327 Stuttgart (DE)
(72) Erfinder: KERRES, Wilhelm, 70327 Stuttgart (DE)
(86) Internationale Anmeldenummer: PCT/EP2005/007112
(87) Internationale Veröffentlichungsnummer: WO 2006/007955

(56) Entgegenhaltungen:
- WO-A-96/08639
- WO-A-96/36797
- WO-A-99/56858
- WO-A-02/101209

## Beschreibung

Die Erfindung betrifft ein Reduktionsmittelzugabesystem zur Zugabe eines Reduktionsmittels stromauf eines in einer Abgasleitung einer Brennkraftmaschine angeordneten Abgaskatalysators sowie ein Verfahren zur Aufbereitung und Zugabe eines für die katalytische Abgasreinigung geeigneten Reduktionsmittels zu einer Abgasleitung einer Brennkraftmaschine.

Aus der Patentschrift EP 1 316 689 A2 ist eine Dosiereinrichtung zur Zufuhr von wässriger Harnstofflösung in das Abgas einer Brennkraftmaschine bekannt, bei welcher die Versorgungsleitung, mit welcher die Harnstofflösung einem Dosierventil zugeführt wird, in wärmeleitender Verbindung mit einer Kraftstoffrücklaufleitung der Brennkraftmaschine steht. Durch diese Maßnahme wird ein Einfrieren der Harnstofflösung vermieden, da sich beim Betrieb der Brennkraftmaschine die Kraftstoffrücklaufleitung auf etwa 60 °C erwärmt. Vom Dosierventil wird die Harnstofflösung mengenmäßig dosiert abgegeben. Der Harnstoff dient dabei als Quelle von zur katalytischen Stickoxidverminderung eingesetztem Ammoniak. Eine Schwierigkeit bei dieser Art von Bereitstellung des Reduktionsmittels Ammoniak besteht darin, dass dieser zunächst durch Hydrolyse aus Harnstoff freigesetzt muss, wozu Temperaturen von über 100 °C und somit eine Verdampfung des Harnstofflösungsmittels Wasser erforderlich ist. Dies erfordert wiederum eine feine und gleichmäßige Verdüsung der Harnstofflösung. Gemäß der EP 1 316 689 A2 erfolgt daher die Abgabe der Harnstofflösung unter Bildung eines Aerosols in eine von einem Abgasturbolader abzweigende und in die Abgasleitung mündende Zuführleitung.

Aufgabe der Erfindung ist es, ein Reduktionsmittelzugabesystem sowie ein Verfahren anzugeben, durch welche auf einfache Weise die Zugabe eines möglichst gut aufbereiteten Reduktionsmittels in das Abgas einer Brennkraftmaschine ermöglicht ist.

Diese Aufgabe wird durch ein Reduktionsmittelzugabesystem mit den Merkmalen des Anspruchs 1 sowie durch ein Verfahren mit den Merkmalen des Anspruchs 5 gelöst.

Das erfindungsgemäße Reduktionsmittelzugabesystem weist eine Reduktionsmitteldosier- und Mischeinheit auf, der das Reduktionsmittel und ein Druckgas zuführbar sind. Ferner ist ein Reduktionsmitteldosierventil zur mengenmäßig und bedarfsgerecht dosierten Abgabe des Reduktionsmittels in eine Mischkammer vorgesehen. Der Mischkammer ist neben dem flüssigen Reduktionsmittel das Druckgas, vorzugsweise Druckluft zuführbar. Dabei ist in der Mischkammer ein Gemisch aus zugeführtem Reduktionsmittel und zugeführtem Druckgas erzeugbar, welches über eine Gemischleitung einer Zugabedüse in der Abgasleitung zugeführt wird, wobei die Gemischleitung beheizbar ausgeführt ist.

Das erfindungsgemäße Reduktionsmittelzugabesystem ermöglicht einerseits die Bereitstellung eines Reduktionsmittel-Gas-Gemisches in einer von der Abgasleitung entfernten Position in einer Mischkammer. Die Dosierung des Reduktionsmittels kann aufgrund dieser Position in einer separaten Einheit unbeeinflusst von Temperatureinwirkungen des Abgases besonders genau erfolgen. Bereits in der Mischkammer erfolgt eine feine Verteilung des flüssigen Reduktionsmittels mit dem zugeführten Druckgas in der Art eines Aerosols, wodurch bereits vor der Abgabe ins Abgas eine vergleichsweise homogene Mischung aus Reduktionsmittel und Druckgas ermöglicht ist. Infolgedessen vereinfacht sich die weitere Verteilung des Gemisches im Abgas und die mit der Verdüsung einer Flüssigkeit ins Abgas verbundenen Probleme werden vermieden. Die Mischkammer kann zur Erzielung einer homogenen Mischung beispielsweise durch Mittel zur Zerstäubung und Verwirbelung des flüssigen Reduktionsmittels speziell ausgelegt sein. Eine weitere Aufbereitung des Reduktionsmittels ist durch die erfindungsgemäß beheizte Gemischleitung ermöglicht. Auf dem Transportweg zum Abgas kann beispielsweise eine Verdampfung des Flüssiganteils des Reduktionsmittel-Gas-Gemisches erfolgen. Dadurch werden die aufgrund der häufig ungünstigen Abgastemperaturen vorhandenen Verdampfungsprobleme im Abgas ebenso wie Kondensationen des Flüssiganteils des Reduktionsmittels in der Abgasleitung wirksam vermieden. Dies ist insbesondere bei einem Reduktionsmittel in Form eines hochsiedenden Kohlenwasserstoffs wie beispielsweise einem Dieselöl vorteilhaft.

Im Falle eines in Form einer wässrigen Harnstofflösung vorliegenden Reduktionsmittels kann in der Gemischleitung bereits eine hydrolytische Zersetzung des Harnstoffs erfolgen. Es ist deshalb vorteilhaft, eine Beheizung auf ein Temperaturniveau vorzusehen, bei welchem eine hydrolytische Harnstoffzersetzung erfolgt. Dadurch erübrigen sich zusätzliche Maßnahmen zur Harnstoffhydrolyse wie beispielsweise ein Hydrolysekatalysator im Abgas. Durch die Beheizung werden außerdem Ablagerungen durch Kondensation oder Kristallisation in der Gemischleitung vermieden. Dadurch erhöht sich wiederum die Dosiergenauigkeit, da Reduktionsmittelverluste auf dem Transportweg vermieden werden.

In Ausgestaltung der Erfindung ist die Gemischleitung wenigstens abschnittsweise mit einem Gefälle zwischen Reduktionsmitteldosier- und Mischeinrichtung und Zugabedüse verlegt. Insbesondere ist es vorteilhaft, wenn die Gemischleitung über ihre Länge hinweg insgesamt ein Gefälle aufweist, also durchgehend wenigstens waagerecht verlegt ist. Dadurch werden siphonartige potentielle Sammelstellen für das Reduktionsmittel und damit Verstopfungen vermieden.

In weiterer Ausgestaltung der Erfindung steht die Gemischleitung in Wärmeübergangskontakt mit einer abgasführenden und/oder einer heizflüssigkeitsführenden Leitung. Der Wärmeübergangskontakt kann beispielsweise durch eine wenigstens abschnittsweise doppelwandige Ausführung der Gemischleitung erreicht werden, wobei vorzugsweise im äußeren Mantel das Heizmedium, wie beispielsweise Abgas oder heißes Schmieröl oder eine Kühlflüssigkeit der Brennkraftmaschine geführt sind. Der Wärmeübergangskontakt kann aber auch durch parallele Verlegung der gegebenenfalls miteinander durch Klammerung oder Lötung miteinander in Kontakt gebrachten entsprechenden Leitungen erfolgen.

In weiterer Ausgestaltung der Erfindung ist für die-Gemischleitung eine elektrische Beheizung vorgesehen. Dies hat den Vorteil, dass die Beheizung bedarfsgerecht betrieben und eingestellt werden kann. Beispielsweise kann die Temperatur zur gezielten Verdampfung von Kondensationen oder Ablagerungen von Zeit zu Zeit angehoben werden oder es kann eine vorbestimmte Solltemperatur der Gemischleitung geregelt eingestellt werden.

In dem erfindungsgemäßen Verfahren zur Aufbereitung und Zugabe eines für die katalytische Abgasreinigung geeigneten Reduktionsmittels zu einer Abgasleitung einer Brennkraftmaschine wird Reduktionsmittelflüssigkeit und Druckgas einer Reduktionsmitteldosier- und Mischeinheit zugeführt. In der Mischkammer der Reduktionsmitteldosier- und Mischeinheit wird ein Reduktionsmittel-Gas-Gemisch erzeugt und dieses einer in der Abgasleitung angeordneten Zugabedüse zugeführt, wobei das Reduktionsmittel-Gas-Gemisch aufgeheizt wird. Somit wird der Transport des Reduktionsmittel-Gas-Gemisches zur Zugabedüse zur weiteren Aufbereitung des Reduktionsmittels genutzt. Die bedarfsgerechte mengenmäßige Dosierung des für die Abgasreinigung bestimmten Reduktionsmittels und dessen Zerstäubung mittels von an Bord eines Kraftfahrzeugs verfügbarer Druckluft erfolgt in der separaten Dosier- und Mischeinheit abgekoppelt von der Abgasleitung. Das vorzugsweise als Aerosol vorliegende Reduktionsmittelgemisch erfährt auf seinem Transportweg eine weitere Aufbereitung durch die Beheizung der Gemischleitung. Durch die Beheizung können auf dem Transportweg beispielsweise eine teilweise oder völlige Verdampfung des Flüssiganteils und/oder eine Aufbereitung durch eine chemische Umwandlung wie beispielsweise eine Hydrolyse erfolgen. Das Reduktionsmittel erreicht daher die Zugabedüse bereits in optimal aufbereiteter Form.

In Ausgestaltung des Verfahrens erfolgt die Zufuhr des Reduktionsmittel-Gas-Gemisches zur Zugabedüse über eine langgestreckte beheizte Gemischleitung. Der oftmals als nachteilig anzusehende vergleichsweise lange Transportweg wird erfindungsgemäß in vorteilhafter Weise zur Aufbereitung des Reduktionsmittels über die Beheizung der Gemischleitung ausgenutzt. Vorzugsweise erfolgt die Beheizung wenigstens abschnittsweise elektrisch und die Temperatur der Gemischleitung wird zur Erzielung einer günstigen Gemischaufbereitung entsprechend eingestellt. Durch die Beheizung der Gemischleitung kann diese außerdem frei von Kondensationen oder Ablagerungen gehalten werden oder diese durch Einstellung gegebenenfalls erhöhter Temperaturen entfernt werden.

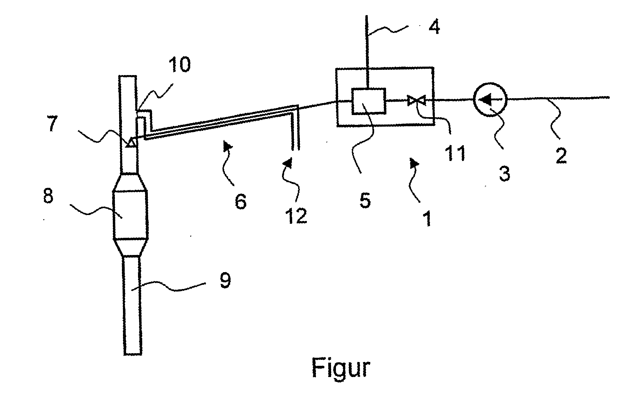

Im Folgenden wird die Erfindung näher erläutert. Dabei zeigt die einzige Figur schematisch eine bevorzugte Ausführungsform des erfindungsgemäßen Reduktionsmittelzugabesystems.

Das erfindungsgemäßen Reduktionsmittelzugabesystem gemäß des in der Figur schematisch dargestellten Ausführungsbeispiels weist eine Reduktionsmitteldosier- und Mischeinheit 1 auf, die der Erzeugung eines Reduktionsmittel-Gas-Gemisches dient. Dieses wird über eine Gemischleitung 6 stromauf eines Abgaskatalysators 8 über eine Zugabedüse 7 in die Abgasleitung 9 einer nicht dargestellten Brennkraftmaschine abgegeben. Die Reduktionsmitteldosier- und Mischeinheit 1 weist eine Mischkammer 5 auf, der einerseits ein Druckgas über eine Druckgasleitung 4 und andererseits ein flüssiges Reduktionsmittel über einer Reduktionsmittelleitung 2 zuführbar ist.

Das Reduktionsmittel wird durch eine Förderpumpe 3 einem nicht dargestellten Reduktionsmittelbehälter entnommen und über ein Dosierventil 11 bedarfsgerecht und mengenmäßig kontrolliert der Mischkammer 5 zugeführt. Die Gemischleitung 6 ist wenigstens abschnittsweise beheizbar ausgeführt. Im vorliegenden Fall erfolgt die Beheizung dadurch, dass ein der Abgasleitung 9 über einen Abzweig 10 entnommener Abgasteilstrom entlang der Gemischleitung geführt ist, so dass ein Wärmeübergang auf das Reduktionsmittel-Gas-Gemisch ermöglicht ist. Dadurch ist eine Erhitzung des Reduktionsmittel-Gas-Gemisches durch heißes Abgas ermöglicht. Über einen Rücklauf 12 erfolgt die Rückführung des Abgasteilstroms in die Abgasleitung 9, vorzugsweise stromab des Abgaskatalysators 8. Aufgrund des Druckverlustes über dem Abgaskatalysator 8 kann dabei der Abgasteilstrom ohne zusätzliche Fördermittel aufrechterhalten werden.

Obschon das erfindungsgemäße Reduktionsmittelzugabesystem zur Zugabe verschiedenster vorzugsweise in flüssiger Form vorliegender Reduktionsmittel geeignet ist, wird nachfolgend davon ausgegangen, dass als Reduktionsmittel eine wässrige Harnstofflösung und als Druckgas Druckluft eingesetzt wird. Dementsprechend handelt es sich bei dem Abgaskatalysator 8 um einen vorzugsweise als SCR-Katalysator ausgeführten Stickoxid-Reduktionsmittelkatalysator, durch welchen eine Umsetzung von im Abgas enthaltenen Stickoxiden mit dem zugeführten Reduktionsmittel katalysiert wird.

Durch die Förderpumpe 3 wird die Harnstofflösung unter Druck gesetzt und in dosierten Mengen bedarfsgerecht über das Dosierventil 11 in die Mischkammer 5 abgegeben, in der eine Vermischung mit dem zugeführten, vorzugsweise annähernd konstanten Druckluftstrom erfolgt. Dabei entsteht eine vorwiegend als Aerosol vorliegende zweiphasige Mischung von Luft und wässeriger Harnstofflösung. Gegebenenfalls können spezielle Mittel zur Vernebelung bzw. Vermischung vorgesehen sein. Falls keine Harnstoffzugabe erforderlich ist, wird der Luftdurchsatz vorzugsweise aufrechterhalten, was der Spülung der Gemischleitung 6 dient und zu deren Reinhaltung beiträgt. Das gebildete Aerosol mit dem zudosierten Anteil an wässeriger Harnstofflösung wird der Injektordüse 7 zugeführt und in das Abgas gedüst.

Die Wirksamkeit des Reduktionsmittels Harnstoff beruht größtenteils in der Freisetzung von Ammoniak aufgrund hydrolytischer Zersetzung. Diese erfolgt vorwiegend oberhalb 100 °C, weshalb eine entsprechende Erhitzung erforderlich ist. Erfindungsgemäß erfolgt dies bereits wenigstens teilweise in der Gemischleitung 6. Hierzu wird die Gemischleitung wenigstens abschnittsweise beheizt. Dies kann durch eine elektrische Beheizung oder durch Wärmeübergang eines heißen Mediums auf das in der Gemischleitung 6 transportierte Reduktionsmittel-Gas-Gemisch erfolgen. Die Beheizung kann hierbei getaktet oder ständig, insbesondere gekoppelt an den Betrieb der Reduktionsmitteldosier- und Mischeinheit 1 erfolgen. Obschon als wärmelieferndes Medium beispielsweise das Kühlmittel oder ein Schmieröl der Brennkraftmaschine eingesetzt werden können, wird hierfür bevorzugt heißes Abgas eingesetzt. Vorzugsweise wird dieses möglichst motornah der Abgasleitung 9 entnommen. Die Gemischleitung 6 ist vorzugsweise als koaxial ausgeführte Leitung mit einem äußeren Mantel für das Heizmedium und einem inneren Rohr für das Reduktionsmittel-Gas-Gemisch gestaltet. Eine Ausführung in Form einer eng gebündelten Doppelleitung ist ebenfalls möglich. Zur Vermeidung von Wärmeverlusten kann für die Gemischleitung 6 eine Wärmeisolierung vorgesehen sein.

Für die mengenmäßige Regulierung der Wärmeabgabe ist ein Einstellorgan, etwa in Form eines Ventils vorgesehen, welches eine Regulierung der Gemischtemperatur in der Gemischleitung 6 ermöglicht. Bevorzugt ist die Einstellung einer Temperatur von etwa 120 °C. Dadurch ist einerseits eine Hydrolyse des Harnstoffs ermöglicht, andererseits wird eine Kondensation von Wasser vermieden. Gegebenenfalls können außerdem Ablagerungen von Harnstoff oder dessen Zersetzungsprodukten durch eine vorübergehende Aufheizung entfernt werden. Dabei kann es vorteilhaft sein, zeitweise stärker erhöhte Temperaturen einzustellen, wozu beispielsweise eine zusätzliche elektrische Beheizung für die Gemischleitung 6 vorgesehen sein kann. Insbesondere für diesen Fall ist es zweckmäßig, für die elektrische Beheizung eine Temperaturregelung vorzusehen. Es können ferner Mittel vorgesehen sein, mit deren Hilfe ein Zusetzen oder eine Verstopfung der Gemischleitung erkannt werden können. Geeignet sind hierfür beispielsweise Mittel zur Erfassung des über der Gemischleitung vorhandenen Druckabfalls. Ebenfalls möglich ist es, den Dosierdruck der Harnstofflösung beispielsweise zwischen Dosierventil 11 und Mischkammer 5 oder der Druckluftdurchsatz zu überwachen. Werden Unregelmäßigkeiten erkannt, so wird die Beheizung der Gemischleitung 6, aktiviert. Gegebenenfalls wird eine besonders erhöhte Reinigungs-Temperatur von etwa 200 °C eingestellt.

Um Ablagerungen bzw. eine Ansammlung von kondensierter Harnstofflösung so weit als möglich zu verhindern, ist es schließlich vorgesehen, die Gemischleitung 6 über ihre Länge mit einem monotonen Gefälle von der Reduktionsmitteldosier- und Mischeinheit 1 bis zur Abgasleitung 9 bzw. zur Zugabedüse 7 zu verlegen. Dadurch wird insbesondere bei einem Außerbetriebsetzen des Reduktionsmittelzugabesystems vermieden, dass sich Kondensatrückstände in der Gemischleitung 6 bilden.

## Patentansprüche

1. Reduktionsmittelzugabesystem zur Zugabe eines Reduktionsmittels stromauf eines in einer Abgasleitung (9) einer Brennkraftmaschine angeordneten Abgaskatalysators (8), umfassend
- eine Reduktionsmitteldosier- und Mischeinheit (1), der Reduktionsmittel und Druckgas zur Erzeugung eines Reduktionsmittel-Gas-Gemisches zuführbar sind,
- eine Zugabedüse (7) zur Zugabe des Reduktionsmittel-Gas-Gemisches in die Abgasleitung (9) und
- eine die Reduktionsmitteldosier- und Mischeinheit (1) mit der Zugabedüse (7) verbindende Gemischleitung (6),
wobei die Gemischleitung (6) wenigstens abschnittsweise beheizbar (6) ausgeführt ist.

2. Reduktionsmittelzugabesystem nach Anspruch 1,
**dadurch gekennzeichnet,**
**dass** die Gemischleitung (6) wenigstens abschnittsweise mit einem Gefälle zwischen der Reduktionsmitteldosier- und Mischeinheit (1) und Zugabedüse (7) verlegt ist.

3. Reduktionsmittelzugabesystem nach Anspruch 1 oder 2,
**dadurch gekennzeichnet,**
**dass** die Gemischleitung (6) in Wärmeübergangskontakt mit einer abgasführenden und/oder heizflüssigkeitsführenden Leitung steht.

4. Reduktionsmittelzugabesystem nach Anspruch 1 oder 2,
**dadurch gekennzeichnet,**
**dass** für die Gemischleitung (6) eine elektrische Beheizung vorgesehen ist.

5. Verfahren zur Aufbereitung und Zugabe eines für die katalytische Abgasreinigung geeigneten Reduktionsmittels zu einer Abgasleitung (9) einer Brennkraftmaschine mit folgenden Verfahrensschritten
- Zufuhr von Reduktionsmittelflüssigkeit zu einer Reduktionsmitteldosier- und Mischeinheit (1),
- Zufuhr von Druckgas zur Reduktionsmitteldosier- und Mischeinheit (1),
- Erzeugung eines Reduktionsmittel-Gas-Gemisches in einer Mischkammer (5) der Reduktionsmitteldosier- und Mischeinheit (1) und
- Zufuhr des Reduktionsmittel-Gas-Gemisches zu einer in der Abgasleitung (9) angeordneten Zugabedüse (7),
wobei das Reduktionsmittel-Gas-Gemisch bei der Zufuhr zur Zugabedüse (7) aufgeheizt wird.

6. Verfahren nach Anspruch 5,
**dadurch gekennzeichnet,**
**dass** die Zufuhr des Reduktionsmittel-Gas-Gemisches zur Zugabedüse (7) über eine langgestreckte beheizte Gemischleitung (7) erfolgt.

## Claims

1. Reducing agent addition system for the addition of a reducing agent upstream of a catalytic converter (8) installed into an exhaust pipe (9) of an internal combustion engine, comprising
- a reducing agent metering and mixing unit (1), to which reducing agent and compressed gas can be supplied to produce a reducing agent/gas mixture,
- an addition nozzle (7) for the addition of the reducing agent/gas mixture to the exhaust pipe (9), and
- a mixture line (6) connecting the reducing agent metering and mixing unit (1) to the addition nozzle (7),
wherein at least a section of the mixture line (6) is designed to be heated (6).

2. Reducing agent addition system according to claim 1,
**characterised in that**
at least a section of the mixture line (6) is routed with a gradient between the reducing agent metering and mixing unit (1) and the addition nozzle (7).

3. Reducing agent addition system according to claim 1 or 2,
**characterised in that**
the mixture line (6) is in heat transfer contact with a line through which exhaust gas and/or a heating fluid flow(s).

4. Reducing agent addition system according to claim 1 or 2,
**characterised in that**
electric heating is provided for the mixture line (6).

5. Method for the preparation and addition of a reducing agent suitable for catalytic exhaust emission control to an exhaust pipe (9) of an internal combustion engine, comprising the following process steps:
- Supply of reducing fluid to a reducing agent metering and mixing unit (1),
- Supply of compressed gas to the reducing agent metering and mixing unit (1),
- Production of a reducing agent/gas mixture in a mixing chamber (5) of the reducing agent metering and mixing unit (1), and
- Supply of the reducing agent/gas mixture to an addition nozzle (7) located in the exhaust pipe (9),
wherein the reducing agent/gas mixture is heated while being supplied to the addition nozzle (7).

6. Method according to claim 5,
**characterised in that**
the reducing agent/gas mixture is supplied to the addition nozzle (7) via a long heated mixture line (7).

## Revendications

1. Système d'addition d'agent de réduction destiné à additionner un agent de réduction en amont d'un pot catalytique (8) de gaz d'échappement agencé dans une conduite de gaz d'échappement (9) d'un moteur à combustion interne, comprenant
- une unité (1) de dosage et de mélange d'agent de réduction à laquelle peuvent être amenés de l'agent de réduction et du gaz sous pression pour produire un mélange agent de réduction - gaz,
- une buse d'addition (7) du mélange agent de réduction - gaz dans la conduite de gaz d'échappement (9), et
- une conduite de mélange (6) reliant l'unité (1) de dosage et de mélange d'agent de réduction à la buse d'addition (7),
la conduite de mélange (6) étant réalisée de manière à pouvoir être chauffée au moins par tronçons.

2. Système d'addition d'agent de réduction selon la revendication 1, **caractérisé en ce que** la conduite de mélange (6) est posée de manière à présenter, au moins par tronçons, une déclivité, entre l'unité (1) de dosage et de mélange d'agent de réduction et la buse d'addition (7).

3. Système d'addition d'agent de réduction selon la revendication 1 ou 2, **caractérisé en ce que** la conduite de mélange (6) est en contact de transmission de chaleur avec une conduite véhiculant du gaz d'échappement et/ou une conduite véhiculant un liquide de chauffage.

4. Système d'addition d'agent de réduction selon la revendication 1 ou 2, **caractérisé en ce qu'**il est prévu un chauffage électrique pour la conduite de mélange (6).

5. Procédé pour la préparation et l'addition d'un agent de réduction adapté à l'épuration catalytique de gaz d'échappement, dans une conduite de gaz d'échappement (9) d'un moteur à combustion interne, présentant les étapes de procédé suivantes:
- amenée de liquide d'agent de réduction à une unité (1) de dosage et de mélange d'agent de réduction,
- amenée de gaz sous pression à l'unité (1) de dosage et de mélange d'agent de réduction,
- production d'un mélange agent de réduction - gaz dans une chambre de mélange (5) de l'unité (1) de dosage et de mélange d'agent de réduction, et
- amenée du mélange agent de réduction - gaz à une buse d'addition (7) agencée dans la conduite de gaz d'échappement (9),
le mélange agent de réduction - gaz étant chauffé pendant son amenée à la buse d'addition (7).

6. Procédé selon la revendication 5, **caractérisé en ce que** l'amenée du mélange agent de réduction - gaz à la buse d'addition (7) est effectuée par l'intermédiaire d'une conduite de mélange (6) de configuration allongée et chauffée.
